# EUROPÄISCHE PATENTSCHRIFT

(11) **EP 3 131 695 B1**
(45) Veröffentlichungstag und Bekanntmachung des Hinweises auf die Patenterteilung: **05.06.2019**
(21) Anmeldenummer: 15719421.8
(22) Anmeldetag: 13.04.2015
(51) Int. Cl.: B23K 26/08, B23K 26/38

(54) **VERFAHREN UND VORRICHTUNG ZUM LASER-SCHNEIDEN**
METHOD AND DEVICE FOR LASER CUTTING
PROCÉDÉ ET DISPOSITIF DE DÉCOUPE AU LASER

(30) Priorität: 15.04.2014 DE 102014207170
(43) Veröffentlichungstag der Anmeldung: 22.02.2017
(73) Patentinhaber: Trumpf Werkzeugmaschinen GmbH + Co. KG, 71254 Ditzingen (DE)
(72) Erfinder: BELLON, Jochen, 71272 Renningen (DE); MATHIAS, Harald, 74357 Boennigheim (DE); PFISTERER, Dieter, 71732 Tamm (DE); RENZ, Bernd Hermann, 71672 Marbach am Neckar (DE); SCHMAUDER, Frank, 72555 Metzingen (DE)
(74) Vertreter: Kohler Schmid Möbus Patentanwälte
(86) Internationale Anmeldenummer: PCT/EP2015/057936
(87) Internationale Veröffentlichungsnummer: WO 2015/158647

(56) Entgegenhaltungen:
- WO-A1-2011/026486
- WO-A1-2011/131507
- US-A- 5 798 927

## Beschreibung

Die vorliegende Erfindung betrifft ein Verfahren zum Freischneiden eines Werkstückteils entlang einer in sich geschlossenen Sollbahn aus einem plattenförmigen Werkstück mittels eines Laserstrahls einer Laserschneidmaschine, welche einen ersten Antrieb zum Bewegen des Werkstücks zumindest entlang einer ersten Antriebsachse, einen zweiten Antrieb zum Bewegen eines den Laserstrahl auf das Werkstück ausrichtenden Laserschneidkopfes zumindest entlang der ersten Antriebsachse aufweist, wobei Antriebsachsensollwerte der Sollbahn des Laserstrahls in Antriebsachsensollwerte für den ersten Antrieb und in Antriebsachsensollwerte für den zweiten Antrieb aufgeteilt werden, sowie auch eine zum Durchführen des Verfahrens geeignete Laserschneidmaschine zum Laserschneiden von Werkstückteilen entlang einer in sich geschlossenen Sollbahn aus einem plattenförmigen Werkstück mittels eines Laserstrahls.

Ein derartiges Verfahren zum Freischneiden eines Werkstückteils und eine derartige Laserschneidmaschine zur Bearbeitung von Werkstücken sind beispielsweise aus der WO 2011/026486 A1 bekannt geworden.

Bei Maschinen mit redundanten Achsen kann die Sollposition eines Werkzeugs durch verschiedene Kombinationen der Bewegungen entlang der redundanten Achsen erreicht werden. Dabei werden zur Erreichung einer möglichst dynamischen Bewegung eine träge (schwere) Grobachse mit großem Bewegungsraum zur Bewegung über das Werkstück (in der Größenordnung Meter) und eine hochbeschleunigbare (leichte) Feinachse mit kleinem Bewegungsraum (in der Größenordnung einige cm bis wenige 10 cm) für das schnelle Abfahren feiner Konturen gekoppelt. Bei Sheetmover-Laserschneidmaschinen, bei denen sowohl das Werkstück als auch der Laserbearbeitungskopf entlang redundanter Achsen bewegt werden, bildet das Bewegen des Blechs die Grobachse und die Bewegung des Laserkopfs die Feinachse.

Bei dem Verfahren der eingangs genannten WO 2011/026486 A1 wird eine mehrachsige Verfahreinheit mittels einer Steuerung derart bewegt, dass eine mitgeführte Bearbeitungseinheit samt Laserschneidkopf auf einer gewünschten Bahn über einem Werkstück verfährt und das Werkstück mittels eines Laserstrahls bearbeitet wird. Die gewünschte Bahnkurve wird von der Steuerung in eine Bewegung der Verfahreinheit entlang deren Hauptachsen und in eine Auslenkung der Bearbeitungseinheit um deren Zusatzachsen aufgeteilt, und die Antriebe der Verfahr- und Bearbeitungseinheiten werden von der Steuerung entsprechend angesteuert.

Um aus der Sollbahn der Bearbeitung die Sollpositionen für beide Achsen zu erhalten, ist es beispielsweise aus der DE 103 55 614 A1 bekannt, die Sollbahn mittels eines Tiefpassfilters zu filtern und die gefilterte Sollbahn der Grobachse zuzuführen. Die Differenz zwischen der gefilterten Sollbahn und der eigentlichen Sollbahn ergibt die Sollbahn für die Feinachse. Die durch das Tiefpassfilter stark geglätteten Sollwerte werden also der weniger dynamischen Grobachse und die Differenz zwischen den geglätteten Sollwerten der Grobachse und den Sollwerten des Achspaars der höher dynamischen Feinachse zugeführt. Um den für das Verfahren notwendigen Bewegungsraum der Feinachse zu minimieren, was höhere Beschleunigungen für diese Achse ermöglicht, wird die Sollbahn dem System erst nach einer Verzögerung zugeführt. Dadurch ist die Sollbahn der Grobachse näher an der Sollbahn des Gesamtsystems.

Aufgrund der Eigenschaften der Bahnaufteilungsmethode laufen bei Maschinen mit redundanten Achsen die einzelnen Achsen des redundanten Achspaars auch dann noch nach, wenn die überlagerte Bewegung der redundanten Achsen bereits abgeschlossen ist. Die beiden Achsen des Achspaars bewegen sich dabei gegenläufig. Bei Sheetmover-Laserschneidmaschinen ist diese Eigenschaft allerdings problematisch, da sich das Restblech noch bewegt, wenn das Werkstückteil bereits freigeschnitten ist. Dadurch besteht die Gefahr des Überlappens oder Verhakens zwischen dem freigeschnittenen Werkstückteil und dem Restblech. Die einfachste und bislang angewendete Lösung des Problems besteht darin, die redundanten Achsen rechtzeitig vor der Freischnittendposition anzuhalten und dann bei stillstehendem Blech nur mit der Feinachse den Trennschnitt des letzten Konturabschnitts, den sogenannten "Final Cut" auszuführen. Diese Vorgehensweise kostet jedoch relativ viel Zeit.

Aus der WO 2011/131507 A1 ist schließlich noch ein Verfahren zur Laserbearbeitung eines Werkstücks bekannt geworden, bei dem ein Abbremsen/Beschleunigen des Werkstücks bei gleichzeitiger Bewegung der Bearbeitungsvorrichtung erfolgt um die Relativgeschwindigkeit zwischen Laserstrahl und Werkstück konstant zu halten, allerdings dient das Verfahren nur zur Durchführung gerader Trennschnitte am Werkstückrand. Eine Bearbeitung des Werkstücks entlang einer in sich geschlossenen Sollbahn, was zu problematischen, freigeschnittenen Werkstückteilen wie oben beschrieben führt, ist nicht möglich.

Es ist demgegenüber die Aufgabe der Erfindung, bei einem Verfahren der eingangs genannten Art das Überlappen oder Verhaken von freigeschnittenen Werkstückteilen mit dem Restwerkstück sicher und zuverlässig zu vermeiden, also die Prozesssicherheit beim Ausschleusen von freigeschnittenen Werkstückteilen zu erhöhen, sowie eine zugehörige Laserschneidmaschine bereitzustellen.

Diese Aufgabe wird erfindungsgemäß dadurch gelöst, dass ab einem Zeitpunkt, der um mindestens die Bremszeit des ersten Antriebs vor der Freischnittendposition des Werkstückteils liegt, die Antriebsachsensollwerte für den ersten Antrieb auf einen konstanten Antriebsachsensollwert überführt werden, so dass nach dem Abbremsen des ersten Antriebs das Freischneiden des Werkstückteils nur noch durch Bewegen des Laserschneidkopfs ausgeführt wird und das Werkstück spätestens an der Freischnittendposition zum Stehen kommt.

Erfindungsgemäß wird der Grobachse kurz vor der Freischnittendposition ein konstanter Sollwert zugeführt, so dass die Grobachse und somit das Werkstück zum Stehen kommen und sich beim Freischneiden des Werkstückteils nur noch die Feinachse bewegt. Idealerweise wird der Umschaltzeitpunkt derart gewählt, dass das Werkstück gerade in dem Moment zum Stillstand kommt, in dem der Laserstrahl die Freischnittendposition erreicht. Durch die fliegende Einleitung des Final Cut ohne vorheriges Anhalten der redundanten Achsen wird bei jedem Trennschnitt Zeit eingespart.

Vorzugsweise werden niederfrequente Antriebsachsensollwerte aus den Antriebsachsensollwerten mittels eines Tiefpassfilters herausgefiltert und hochfrequente Antriebsachsensollwerte als Differenz zwischen den ursprünglichen Antriebsachsensollwerten und den niederfrequenten Antriebsachsensollwerten ermittelt. Dieser fliegend eingeleitete Final Cut lässt sich dann besonders einfach mittels einer Schaltfunktion realisieren, die die Grobachse spätestens an der Position anhält, bei der der Final Cut beginnt. Besonders bevorzugt werden die Antriebsachsensollwerte für den ersten Antrieb durch einen vor dem Tiefpassfilter angeordneten Schalter ab dem Zeitpunkt, der um mindestens die Bremszeit des ersten Antriebs vor der Freischnittendposition des Werkstückteils liegt, auf einen konstanten Antriebsachsensollwert geschaltet.

Bei der Bahnaufteilung mittels Tiefpassfilter wird zwischen Bahnaufteilung mit und ohne verzögerte Bahnausführung unterschieden. Bei einer Bahnaufteilung, bei der die hochfrequenten Antriebsachsensollwerte als Differenz zwischen den nicht-zeitverzögerten ursprünglichen Antriebsachsensollwerten und den niederfrequenten Antriebsachsensollwerten ermittelt werden, liegt der Umschaltzeitpunkt um mindestens die doppelte Gruppenlaufzeit des Tiefpassfilters vor der Freischnittendposition des Werkstückteils. Bei einer Bahnaufteilung, bei der die hochfrequenten Antriebs-achsensollwerte als Differenz zwischen den zeitverzögerten ursprünglichen Antriebsachsensollwerten und den niederfrequenten Antriebsachsensollwerten ermittelt werden, liegt der Umschaltzeitpunkt um mindestens eine Gruppenlaufzeit des Tiefpassfilters vor der Freischnittendposition des Werkstückteils.

Die Erfindung betrifft in einem weiteren Aspekt auch eine Laserschneidmaschine zum Laserschneiden von Werkstückteilen entlang einer in sich geschlossenen Sollbahn aus einem plattenförmigen Werkstück mittels eines Laserstrahls mit einem ersten Antrieb zum Bewegen des Werkstücks zumindest entlang einer ersten Antriebsachse und einem zweiten Antrieb zum Bewegen eines den Laserstrahl auf das Werkstück ausrichtenden Laserschneidkopfes zumindest entlang der ersten Antriebsachse, sowie mit einer Vorrichtung zur Bewegungsaufteilung von Antriebsachsensollwerten der Sollbahn des Laserstrahls in niederfrequente Antriebsachsensollwerte des ersten Antriebs und in hochfrequente Antriebsachsensollwerte des zweiten Antriebs, wobei die Vorrichtung die hochfrequenten Antriebsachsensollwerte als Differenz zwischen den ursprünglichen Antriebsachsensollwerten und den niederfrequenten Antriebsachsensollwerten ermittelt und erfindungsgemäß eine ansteuerbare Überführungseinrichtung aufweist, die die Antriebsachsensollwerte für den ersten Antrieb auf einen konstanten Antriebsachsensollwert überführt.

Besonders bevorzugt weist die Vorrichtung ein z.B. als linearphasiges FIR-Filter realisiertes Tiefpassfilter, das aus den zugeführten Antriebsachsensollwerten die niederfrequenten Antriebsachsensollwerte filtert, und einen Subtrahierer, der die hochfrequenten Antriebsachsensollwerte als Differenz zwischen den ursprünglichen Antriebsachsensollwerten und den niederfrequenten Antriebsachsensollwerten ermittelt, und als Überführungseinrichtung einen dem Tiefpassfilter vorgeordneten ansteuerbaren Schalter auf, der in seiner einen Schaltstellung die zugeführten Antriebsachsensollwerte und in seiner anderen Schaltstellung einen konstanten Antriebsachsensollwert an das Tiefpassfilter weiterleitet. Der Schalter wird beispielsweise von der Maschinensteuerung der Laserschneidmaschine rechtzeitig vor der Freischnittendposition angesteuert.

Zur Realisierung eines fliegenden Final Cut ist erfindungsgemäß vor dem Tiefpassfilter ein Schalter eingefügt, der dann umgelegt wird, wenn der Sollwert des redundanten Achspaars die Position erreicht hat, bei der der Final Cut beginnt. Bei umgelegtem Schalter wird diese Zielposition der Grobachse am Eingang des Tiefpassfilters konstant gehalten, so dass die Grobachse und somit das Werkstück zum Stehen kommen und sich beim Freischneiden des Werkstückteils nur noch die Feinachse bewegt. Die zugeführten Antriebsachsensollwerte für die Ausführung des Final Cut werden von der Maschinensteuerung ohne Unterbrechung weiter interpoliert, aber nur für die Berechnung der Sollwerte der Feinachse herangezogen. Die Länge des Final Cut muss dabei so bemessen sein, dass er innerhalb der Reichweite der Feinachse liegt.

Bei der Bahnaufteilung mittels Tiefpassfilters wird zwischen Bahnaufteilung mit und ohne verzögerte Bahnausführung unterschieden, wobei die erfindungsgemäße Realisierung eines fliegend eingeleiteten Final Cut bei beiden Varianten in gleicher Weise funktioniert. Wird als Tiefpassfilter ein linearphasiges FIR-Filter verwendet, so dauert es aufgrund seiner Eigenschaften vom Zeitpunkt des Umlegens des Schalters exakt zwei Gruppenlaufzeiten des Filters, bis die Grobachse zum Stillstand kommt. Das sanfte Abbremsen der Grobachse wird dabei ohne aufwändige Zusatzalgorithmik automatisch durch das Bahnaufteilungsfilter gewährleistet.

Vorzugsweise weist die Vorrichtung einen dem Subtrahierer vorgeordneten Verzögerer auf, der die zugeführten Antriebsachsensollwerte um mindestens die Gruppenlaufzeit des Tiefpassfilters zeitlich verzögert. Wird als Tiefpassfilter ein linearphasiges FIR-Filter verwendet, so dauert es aufgrund seiner Eigenschaften vom Zeitpunkt des Umlegens des Schalters exakt eine Gruppenlaufzeit des Filters, bis die Grobachse zum Stillstand kommt. Das sanfte Abbremsen der Grobachse wird dabei ohne aufwändige Zusatzalgorithmik automatisch durch das Bahnaufteilungsfilter gewährleistet.

Bei einer bevorzugten Ausführungsform der Erfindung sind der erste Antrieb zum Bewegen des Werkstücks entlang zweier zueinander rechtwinkliger Antriebsachsen und der zweite Antrieb zum Bewegen des Laserschneidkopfes entlang der zwei Antriebsachsen ausgebildet. In diesem Fall kann die Vorrichtung für beide Antriebsachsen jeweils ein Tiefpassfilter und einen Subtrahierer zur Bewegungsaufteilung der Antriebsachsensollwerte der Sollbahn in niederfrequente Antriebsachsensollwerte der Grobachsen und in hochfrequente Antriebsachsensollwerte der Feinachsen sowie einen dem Tiefpassfilter vorgeordneten ansteuerbaren Schalter aufweisen, der in seiner einen Schaltstellung die zugeführten Antriebsachsensollwerte und in seiner anderen Schaltstellung einen konstanten Antriebsachsensollwert an das Tiefpassfilter weiterleitet. Die Schalter werden beispielsweise von der Maschinensteuerung der Laserschneidmaschine rechtzeitig vor der Freischnittendposition angesteuert.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Laserschneidmaschine mit einem entlang der X- und Y-Achsen verfahrbaren Werkstück, einem entlang der X- und Y-Achsen verfahrbaren Laserschneidkopf und einer Vorrichtung zur Bahnaufteilung der Sollbahn des Laserstrahls in eine Bewegung entlang der Werkstückachsen und in eine Bewegung entlang der Laserschneidkopfachsen;
- Fign. 2a, 2b: eine bekannte Bahnaufteilungsvorrichtung mit einem Tiefpassfilter ohne Zeitverzögerung (Fig. 2a) und eine zugehörige Bahnaufteilung (Fig. 2b) entlang der Y-Achse beim Laserschneiden eines quadratischen Werkstückteils;
- Fign. 3a, 3b: eine bekannte Bahnaufteilungsvorrichtung mit einem Tiefpassfilter mit Zeitverzögerung (Fig. 3a) und eine zugehörige Bahnaufteilung (Fig. 3b) entlang der Y-Achse beim Laserschneiden eines quadratischen Werkstückteils;
- Fign. 4a, 4b: eine erfindungsgemäße Bahnaufteilungseinrichtung mit einem Tiefpassfilter ohne Zeitverzögerung (Fig. 4a) und eine zugehörige Bahnaufteilung (Fig. 4b) entlang der Y-Achse beim Laserschneiden eines quadratischen Werkstückteils; und
- Fign. 5a, 5b: eine erfindungsgemäße Bahnaufteilungsvorrichtung mit einem Tiefpassfilter mit Zeitverzögerung (Fig. 5a) und eine zugehörige Bahnaufteilung (Fig. 5b) entlang der Y-Achse beim Laserschneiden eines quadratischen Werkstückteils.

In der folgenden Figurenbeschreibung werden für gleiche bzw. funktionsgleiche Bauteile identische Bezugszeichen verwendet.

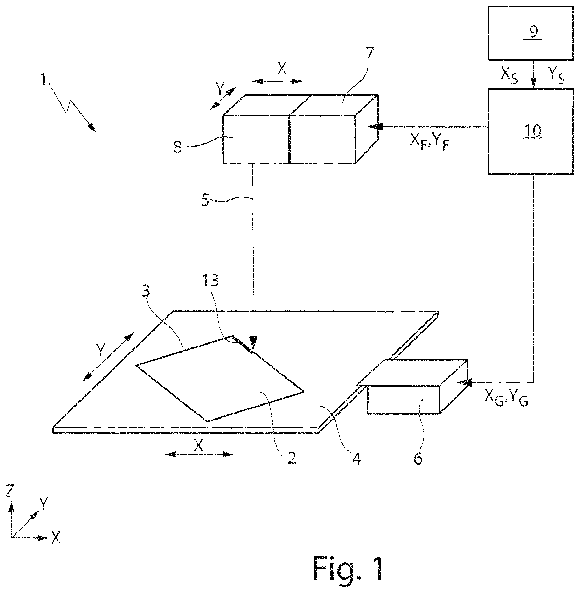

Die in **Fig. 1** gezeigte Laserschneidmaschine **1** dient zum Laserschneiden von Werkstückteilen **2** entlang einer Sollbahn **3** aus einem plattenförmigen Werkstück (z.B. Blech) **4** mittels eines Laserstrahls **5**. Die Laserschneidmaschine 1 umfasst einen ersten XY-Antrieb ("Werkstückantrieb") **6** zum Bewegen des Werkstücks 4 in der XY-Ebene entlang der X- und Y-Achsen, einen zweiten XY-Antrieb ("Laserschneidkopfantrieb") **7** zum Bewegen eines den Laserstrahl 5 auf das Werkstück 4 ausrichtenden Laserschneidkopfes **8** entlang der X- und Y-Achsen sowie eine Maschinensteuerung **9**, die die Sollwerte **XS**, **YS** für die Sollbahn des Laserstrahls 5 auf dem Werkstück 4 liefert. Die Laserschneidmaschine 1 weist außerdem eine Vorrichtung **10** zur Bewegungsaufteilung der Antriebsachsensollwerte XS, YS der Sollbahn 3 des Laserstrahls 5 in niederfrequente Antriebsachsensollwerte **XG**, **YG** für den Werkstückantrieb 6 und in hochfrequente Antriebsachsensollwerte **XF**, **YF** für den Laserschneidkopfantrieb 7 auf.

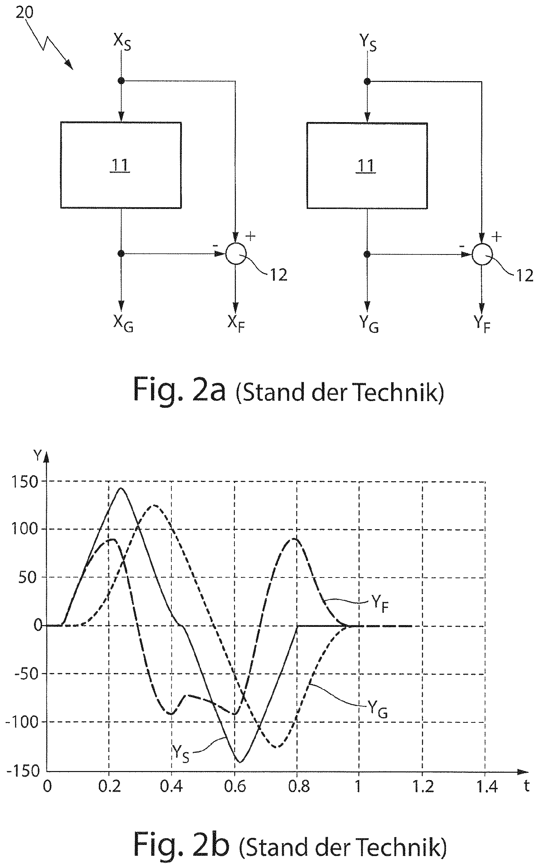

**Fig. 2a** zeigt eine bekannte Bahnaufteilungsvorrichtung **20** mit jeweils einem Tiefpassfilter **11** ohne Zeitverzögerung und einem Subtrahierer **12** für beide Antriebsachsen X, Y. Die Tiefpassfilter 11 sind linearphasige FIR-Filter mit konstanter Gruppenlaufzeit und filtern aus den zugeführten Antriebsachsensollwerten XS, YS jeweils die niederfrequenten Antriebsachsensollwerte XG, YG heraus und leiten sie an den Werkstückantrieb 6 weiter. Die Subtrahierer 12 ermitteln die hochfrequenten Antriebsachsensollwerte XF, YF als Differenz zwischen den zugeführten Antriebsachsensollwerten XS, YS und den gefilterten Antriebsachsensollwerten XG, YG und leiten sie an den Laserbearbeitungskopfantrieb 7 weiter. Die durch die Tiefpassfilter 11 stark geglätteten niederfrequenten Antriebsachsensollwerte XG, YG werden also den weniger dynamischen Grobachsen des Werkstückantriebs 6 zugeführt, und die Differenz zwischen den ursprünglichen Antriebsachsensollwerten XS, YS und den geglätteten Antriebsachsensollwerten XG, YG der Grobachse wird den höher dynamischen Feinachsen des Laserschneidkopfantriebs 7 zugeführt.

In **Fig. 2b** ist der zeitliche Verlauf der zugehörigen Bahnaufteilung beim Laserschneiden eines quadratischen Werkstückteils 2 entlang der Y-Achse gezeigt, also der zeitliche Verlauf der zugeführten Antriebsachsensollwerte YS, der Antriebsachsensollwerte YG für die Grobachse und der Antriebsachsensollwerte YF für die Feinachse. Aufgrund der Eigenschaften der Bahnaufteilung laufen die Grob- und Feinachsen auch dann noch gegenläufig nach, wenn die überlagerte Bewegung der redundanten Grob- und Feinachsen bereits abgeschlossen ist. Das Restblech bewegt sich also noch, wenn das Werkstückteil 2 bereits freigeschnitten ist. Dadurch besteht die Gefahr des Überlappens oder Verhakens zwischen dem Werkstückteil 2 und dem Restblech.

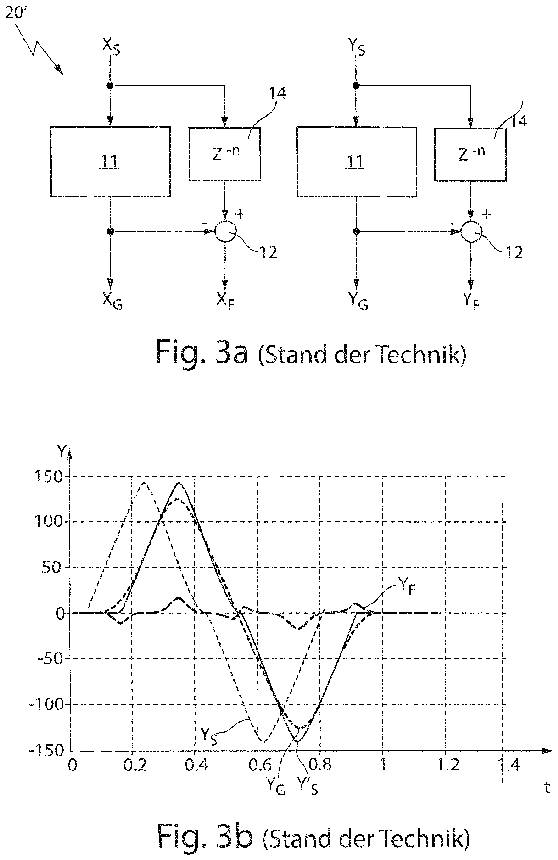

Von der Bahnaufteilungsvorrichtung 20 unterscheidet sich die in **Fig. 3a** gezeigte bekannte Bahnaufteilungsvorrichtung **20'** lediglich dadurch, dass hier die Antriebs-achsensollwerte XS, YS mittels Verzögerern **14** zeitverzögert den Subtrahierern 12 zugeführt werden. Dadurch liegt einerseits die Sollbahn der Grobachse näher an der Sollbahn des Gesamtsystems und wird andererseits der für das Verfahren notwendige Bewegungsraum der Feinachse minimiert, was höhere Beschleunigungen für diese Achse ermöglicht. In **Fig. 3b** ist der zeitliche Verlauf der zugehörigen Bahnaufteilung beim Laserschneiden eines quadratischen Werkstückteils 2 entlang der Y-Achse gezeigt, also der zeitliche Verlauf der zugeführten Antriebsachsensollwerte YS, der verzögerten Antriebsachsensollwerte YS', der Antriebsachsensollwerte YG für die Grobachse und der Antriebsachsensollwerte YF für die Feinachse. Auch hier laufen die Grob- und Feinachsen auch dann noch gegenläufig nach, wenn die überlagerte Bewegung der redundanten Grob- und Feinachsen bereits abgeschlossen ist.

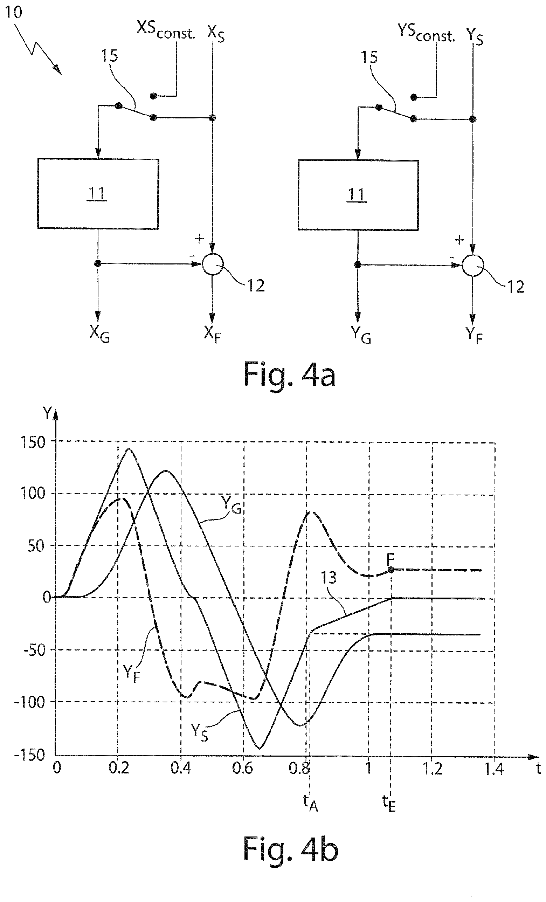

Von der Bahnaufteilungsvorrichtung 20 unterscheidet sich die in **Fig. 4a** gezeigte erfindungsgemäße Bahnaufteilungsvorrichtung 10 dadurch, dass hier den Tiefpassfiltern 11 jeweils ein Schalter **15** vorgeordnet ist, der von der Maschinensteuerung 9 angesteuert wird. Die Schalter 15 leiten in ihrer einen Schaltstellung die zugeführten Antriebsachsensollwerten XS, YS und in ihrer anderen Schaltstellung einen konstanten Antriebsachsensollwert XS_{const}, YS_{const} an die jeweiligen Tiefpassfilter 11 weiter.

In **Fig. 4b** ist die zugehörige Bahnaufteilung beim Laserschneiden eines quadratischen Werkstückteils 2 entlang der Y-Achse gezeigt, also der zeitliche Verlauf der zugeführten Antriebsachsensollwerte YS, der Antriebsachsensollwerte YG für die Grobachse und der Antriebsachsensollwerte YF für die Feinachse. Zum Zeitpunkt **t_{A}**, der um die Bremszeit der Grobachse vor der Freischnittendposition F des Werkstückteils 2 liegt, wird der Final Cut **13** des Werkstückteils 2, also der Trennschnitt des letzten Konturschnitts zum Freischneiden des Werkstückteils 2 vom Werkstück 4, durch Umschalten des Schalters 15 auf die konstanten Antriebsachsensollwerte XS_{const}, YS_{const} eingeleitet. Bei umgelegtem Schalter 15 wird diese Sollposition am Eingang des Tiefpassfilters 11 konstant gehalten ("eingefroren"), also die Grobachse an der Position angehalten, bei der der Final Cut 13 beginnt. Die Sollwerte für die Ausführung des Final Cut 13 werden von der Maschinensteuerung 9 ohne Unterbrechung weiter interpoliert und für die Berechnung der Sollwerte der Feinachse herangezogen. Ab dem Zeitpunkt t_{A} erfolgt das Freischneiden des Werkstückteils 2 zunehmend durch Bewegen der Feinachse bzw. des Laserschneidkopfs 8, während die Grobachse bzw. das Werkstück 4 abbremsen und gerade zu dem Zeitpunkt **t_{E}** zum Stillstand kommen, in dem der Final Cut 13 die Freischnittendposition **F** erreicht. Die Länge des Final Cut 13 muss dabei so bemessen sein, dass er innerhalb der Reichweite der Feinachse liegt. Aufgrund der Eigenschaften des verwendeten linearphasigen FIR-Tiefpassfilters 11 dauert es vom Zeitpunkt des Umlegens des Schalters 15 exakt zwei Gruppenlaufzeiten des Tiefpassfilters 11, bis die Grobachse zum Stillstand kommt. Bei dieser Bahnaufteilung ohne zeitversetzte Bahnausführung muss die Bremszeit für die Ausführung des Final Cut 13 daher mindestens zwei Gruppenlaufzeiten betragen. Das sanfte Abbremsen der Grobachse wird dabei ohne aufwändige Zusatzalgorithmik automatisch durch das Tiefpassfilter 11 gewährleistet.

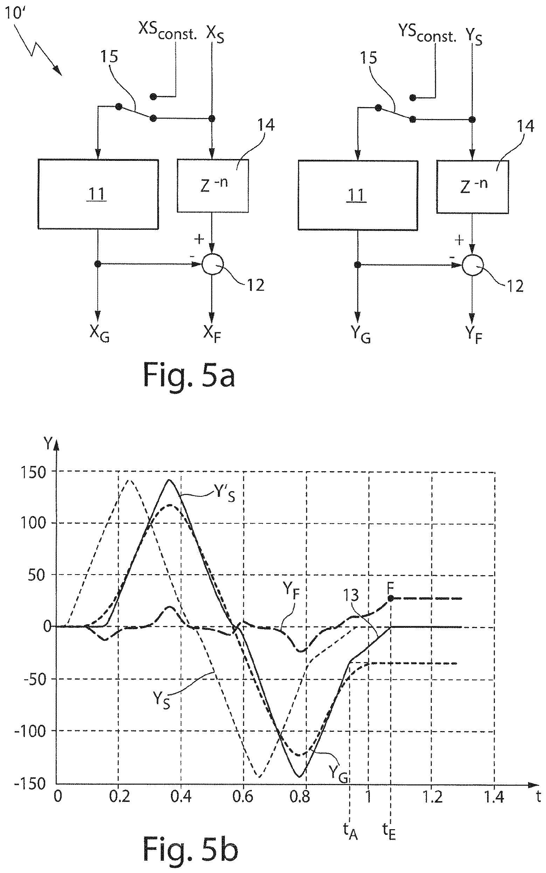

Von der Bahnaufteilungsvorrichtung 10 unterscheidet sich die in **Fig. 5a** gezeigte erfindungsgemäße Bahnaufteilungsvorrichtung **10'** lediglich dadurch, dass hier die Antriebsachsensollwerte XS, YS mittels Verzögerern 14 zeitverzögert den Subtrahierern 12 zugeführt werden. In **Fig. 5b** ist die zugehörige Bahnaufteilung beim Laserschneiden eines quadratischen Werkstückteils 2 entlang der Y-Achse gezeigt, also der zeitliche Verlauf der zugeführten Antriebsachsensollwerte YS, der verzögerten Antriebsachsensollwerte YS', der Antriebsachsensollwerte YG für die Grobachse und der Antriebsachsensollwerte YF für die Feinachse. Zum Zeitpunkt t_{A}, der um die Bremszeit der Grobachse vor der Freischnittendposition F des Werkstückteils 2 liegt, wird der Final Cut 13 durch Umschalten des Schalters 15 auf die konstanten Antriebsachsensollwerte XG_{const}, YG_{const} eingeleitet, so dass das Freischneiden des Werkstückteils 2 nur noch durch Bewegen der Feinachse bzw. des Laserschneidkopfs 8 erfolgt und die Grobachse bzw. das Werkstück 4 gerade zu dem Zeitpunkt t_{E} zum Stillstand kommen, in dem der Final Cut 13 die Freischnittendposition F erreicht. Bei dieser Bahnaufteilung, bei der die Bahn um eine Gruppenlaufzeit zeitversetzt ausgeführt wird, muss die Bremszeit für die Ausführung des Final Cut 13 mindestens eine Gruppenlaufzeit betragen.

Die Schalter 15 für die Umschaltung der Sollwerte können auf die gleiche Weise in der Maschinensteuerung 9 implementiert werden wie die Tiefpassfilter 11 für die Bahnaufteilung. Die Information, wann die Schalter 15 umgelegt werden müssen und wie stark die Geschwindigkeit während des Final Cut 13 reduziert werden muss, kann auf vorteilhafte Weise über eine Anwenderschnittstelle (NCK-OEM-Schnittstelle) oder über geeignete Synchronaktionen berechnet werden, die an entsprechender Stelle im NC-Programm der Werkstückbearbeitung eingefügt werden.

Zum Zeitpunkt t_{A}, an der die Sollwerte der Grobachsen eingefroren werden, können optional zusätzlich noch Offsetwerte XS_{offset}, YS_{offset} auf die Sollwerte aufgeschlagen werden. Durch diese Offsetwerte kann die Lage des freigeschnittenen Werkstückteils 2 relativ zur Schneidmatrize beim Freischneiden manipuliert werden. Die Aufschaltung erfolgt - ebenso wie das Einfrieren der Antriebsachsensollwerte XS, YS - "hart". Nach dem Final Cut 13 werden beim Zuschalten der Grobachsen mittels der Schalter 15 die Offsetwerte wieder zurückgenommen.

## Patentansprüche

1. Verfahren zum Freischneiden eines Werkstückteils (2) entlang einer in sich geschlossenen Sollbahn (3) aus einem plattenförmigen Werkstück (4) mittels eines Laserstrahls (5) einer Laserschneidmaschine (1), welche einen ersten Antrieb (6) zum Bewegen des Werkstücks (4) zumindest entlang einer ersten Antriebsachse (X), einen zweiten Antrieb (7) zum Bewegen eines den Laserstrahl (5) auf das Werkstück (4) ausrichtenden Laserschneidkopfes (8) zumindest entlang der ersten Antriebsachse (X) aufweist, wobei Antriebsachsensollwerte (XS) der Sollbahn (3) des Laserstrahls (5) in Antriebsachsensollwerte (XG) für den ersten Antrieb (6) und in Antriebsachsensollwerte (XF) für den zweiten Antrieb (7) aufgeteilt werden,
**dadurch gekennzeichnet,**
**dass** ab einem Zeitpunkt, der um mindestens die Bremszeit des ersten Antriebs (6) vor der Freischnittendposition (F) des Werkstückteils (2) liegt, die Antriebsachsensollwerte (XG) für den ersten Antrieb (6) auf einen konstanten Antriebsachsensollwert überführt werden, so dass nach dem Abbremsen des ersten Antriebs (6) das Freischneiden des Werkstückteils (2) nur noch durch Bewegen des Laserschneidkopfs (8) ausgeführt wird und das Werkstück (4) spätestens an der Freischnittendposition (F) zum Stehen kommt.

2. Verfahren nach Anspruch 1, **dadurch gekennzeichnet, dass** der Umschaltzeitpunkt derart gewählt wird, dass das Werkstück (4) gerade in dem Moment zum Stillstand kommt, in dem der Laserstrahl (5) die Freischnittendposition (F) erreicht.

3. Verfahren nach Anspruch 1 oder 2, **dadurch gekennzeichnet, dass** niederfrequente Antriebsachsensollwerte (XG) aus den Antriebsachsensollwerten (XS) mittels eines Tiefpassfilters (11) herausgefiltert und hochfrequente Antriebsachsensollwerte (XF) als Differenz zwischen den ursprünglichen Antriebsachsensollwerten (XS) und den niederfrequenten Antriebsachsensollwerten (XG) ermittelt werden.

4. Verfahren nach Anspruch 3, **dadurch gekennzeichnet, dass** die Antriebsachsensollwerte (XG) für den ersten Antrieb (6) durch einen vor dem Tiefpassfilter (11) angeordneten Schalter (15) ab dem Zeitpunkt, der um mindestens die Bremszeit des ersten Antriebs (6) vor der Freischnittendposition (F) des Werkstückteils (2) liegt, auf einen konstanten Antriebsachsensollwert (XS_{const}) geschaltet werden.

5. Verfahren nach Anspruch 3 oder 4, **dadurch gekennzeichnet, dass** bei einer Bahnaufteilung, bei der hochfrequente Antriebsachsensollwerte (XF) als Differenz zwischen den nicht-zeitverzögerten ursprünglichen Antriebsachsensollwerten (XS) und niederfrequenten Antriebsachsensollwerten (XG) ermittelt werden, der Umschaltzeitpunkt um mindestens die doppelte Gruppenlaufzeit des Tiefpassfilters (11) vor der Freischnittendposition (F) des Werkstückteils (2) liegt.

6. Verfahren nach Anspruch 3 oder 4, **dadurch gekennzeichnet, dass** bei einer Bahnaufteilung, bei der hochfrequente Antriebsachsensollwerte (XF) als Differenz zwischen den zeitverzögerten ursprünglichen Antriebsachsensollwerten (XS) und niederfrequenten Antriebsachsensollwerten (XG) ermittelt werden, der Umschaltzeitpunkt um mindestens eine Gruppenlaufzeit des Tiefpassfilters (11) vor der Freischnittendposition (F) des Werkstückteils (2) liegt.

7. Laserschneidmaschine (1) zum Laserschneiden von Werkstückteilen (2) entlang einer in sich geschlossenen Sollbahn (3) aus einem plattenförmigen Werkstück (4) mittels eines Laserstrahls (5), mit einem ersten Antrieb (6) zum Bewegen des Werkstücks (4) zumindest entlang einer ersten Antriebsachse (X) und einem zweiten Antrieb (7) zum Bewegen eines den Laserstrahl (5) auf das Werkstück (4) ausrichtenden Laserschneidkopfes (8) zumindest entlang der ersten Antriebsachse (X), sowie mit einer Vorrichtung (10; 10') zur Bewegungsaufteilung von Antriebsachsensollwerten (XS) der Sollbahn (3) des Laserstrahls (5) in niederfrequente Antriebsachsensollwerte (XG) des ersten Antriebs (6) und in hochfrequente Antriebsachsensollwerte (XF) des zweiten Antriebs (7), wobei die Vorrichtung (10; 10') die hochfrequenten Antriebsachsensollwerte (XF) als Differenz zwischen den ursprünglichen Antriebsachsensollwerten (XS) und den niederfrequenten Antriebsachsensollwerten (XG) ermittelt,
**dadurch gekennzeichnet,**
**dass** die Vorrichtung (10; 10') eine ansteuerbare Überführungungseinrichtung (15) aufweist, die die Antriebsachsensollwerte (XG) für den ersten Antrieb (6) auf einen konstanten Antriebsachsensollwert überführt.

8. Laserschneidmaschine nach Anspruch 7, **dadurch gekennzeichnet, dass** die Vorrichtung ein Tiefpassfilter (11), das aus den zugeführten Antriebsachsensollwerten (XS) die niederfrequenten Antriebsachsensollwerte (XG) filtert, einen Subtrahierer (12), der die hochfrequenten Antriebsachsensollwerte (XF) als Differenz zwischen den ursprünglichen Antriebsachsensollwerten (XS) und den niederfrequenten Antriebsachsensollwerten (XG) ermittelt, und als Überführungseinrichtung einen dem Tiefpassfilter (11) vorgeordneten ansteuerbaren Schalter (15) aufweist, der in seiner einen Schaltstellung die zugeführten Antriebsachsensollwerte (XS) und in seiner anderen Schaltstellung einen konstanten Antriebsachsensollwert (XS_{const}) an das Tiefpassfilter (11) weiterleitet.

9. Laserschneidmaschine nach Anspruch 8, **dadurch gekennzeichnet, dass** die Vorrichtung (10') einen dem Subtrahierer (12) vorgeordneten Verzögerer (14) aufweist, der die zugeführten Antriebsachsensollwerte (XS) um mindestens die Gruppenlaufzeit des Tiefpassfilters (11) zeitlich verzögert.

10. Laserschneidmaschine nach einem der Ansprüche 7 bis 9, **dadurch gekennzeichnet, dass** der erste Antrieb (6) zum Bewegen des Werkstücks (4) entlang zweier zueinander rechtwinkliger Antriebsachsen (X, Y) und der zweite Antrieb (7) zum Bewegen des Laserschneidkopfes (8) entlang der zwei Antriebsachsen (X, Y) ausgebildet sind.

11. Laserschneidmaschine nach Anspruch 10, **dadurch gekennzeichnet, dass** die Vorrichtung (10; 10') für beide Antriebsachsen (X, Y) jeweils ein Tiefpassfilter (11) und einen Subtrahierer (12) zur Bewegungsaufteilung der Antriebsachsensollwerte (XS, YS) der Sollbahn (3) in niederfrequente Antriebsachsensollwerte (XG, YG) der Antriebsachsen (X, Y) und in hochfrequente Antriebsachsensollwerte (XF, YF) der Antriebsachsen (X, Y) sowie einen dem Tiefpassfilter (11) vorgeordneten ansteuerbaren Schalter (15) aufweist, der in seiner einen Schaltstellung die zugeführten Antriebsachsensollwerte (XS, YS) und in seiner anderen Schaltstellung einen konstanten Antriebsachsensollwert (XS_{const}, YS_{const}) an das Tiefpassfilter (11) weiterleitet.

12. Laserschneidmaschine nach Anspruch 11, **dadurch gekennzeichnet, dass** die Vorrichtung (10') für beide Antriebsachsen (X, Y) den Subtrahierern (12) vorgeordnete Verzögerer (14) aufweist, die die zugeführten Antriebsachsensollwerte (XS, YS) um mindestens die Gruppenlaufzeit des Tiefpassfilters (11) zeitlich verzögern.

## Claims

1. A method for cutting out a workpiece section (2) along a closed target path (3) from a plate-shaped workpiece (4) using a laser beam (5) of a laser cutting machine (1), which comprises a first drive (6) for moving the workpiece (4) at least along a first drive axis (X), a second drive (7) for moving a laser cutting head (8), which directs the laser beam (5) onto the workpiece (4), at least along the first drive axis (X), wherein drive axis target values (XS) of the target path (3) of the laser beam (5) are divided into drive axis target values (XG) for the first drive (6) and drive axis target values (XF) for the second drive (7),
**characterized in that**
from a point in time which is before the cutting-out end position (F) of the workpiece section (2) by at least the braking time of the first drive (6), the drive axis target values (XG) for the first drive (6) are transferred to a constant drive axis target value, so that after the braking of the first drive (6), the cutting out of the workpiece section (2) is only still executed by moving the laser cutting head (8) and the workpiece (4) comes to a stop at the latest at the cutting-out end position (F).

2. The method as claimed in claim 1, **characterized in that** the switchover point in time is selected such that the workpiece (4) comes to a standstill precisely at the moment at which the laser beam (5) reaches the cutting-out end position (F).

3. The method as claimed in claim 1 or 2, **characterized in that** low-frequency drive axis target values (XG) are filtered out of the drive axis target values (XS) using a low-pass filter (11) and high-frequency drive axis target values (XF) are ascertained as the difference between the original drive axis target values (XS) and the low-frequency drive axis target values (XG).

4. The method as claimed in claim 3, **characterized in that** the drive axis target values (XG) for the first drive (6) are switched to a constant drive axis target value (XS_{const}) by a switch (15) arranged upstream of the low-pass filter (11) from the point in time which is before the cutting-out end position (F) of the workpiece section (2) by at least the braking time of the first drive (6).

5. The method as claimed in claim 3 or 4, **characterized in that**, in the case of a path division in which high-frequency drive axis target values (XF) are ascertained as the difference between the non-time-delayed original drive axis target values (XS) and low-frequency drive axis target values (XG), the switchover point in time is before the cutting-out end position (F) of the workpiece section (2) by at least twice the group delay of the low-pass filter (11).

6. The method as claimed in claim 3 or 4, **characterized in that**, in the case of a path division in which high-frequency drive axis target values (XF) are ascertained as the difference between the time-delayed original drive axis target values (XS) and low-frequency drive axis target values (XG), the switchover point in time is before the cutting-out end position (F) of the workpiece section (2) by at least one group delay of the low-pass filter (11).

7. A laser cutting machine (1) for laser cutting workpiece sections (2) along a closed target path (3) from a plate-shaped workpiece (4) using a laser beam (5), comprising a first drive (6) for moving the workpiece (4) at least along a first drive axis (X) and a second drive (7) for moving a laser cutting head (8), which directs the laser beam (5) onto the workpiece (4), at least along the first drive axis (X), and comprising a device (10, 10') for movement division of drive axis target values (XS) of the target path (3) of the laser beam (5) into low-frequency drive axis target values (XG) of the first drive (6) and high-frequency drive axis target values (XF) of the second drive (7), wherein the device (10, 10') ascertains the high-frequency drive axis target values (XF) as the difference between the original drive axis target values (XS) and the low-frequency drive axis target values (XG),
**characterized in that**
the device (10; 10') comprises an activatable transfer device (15), which transfers the drive axis target values (XG) for the first drive (6) to a constant drive axis target value.

8. The laser cutting machine as claimed in claim 7, **characterized in that** the device comprises a low-pass filter (11), which filters the low-frequency drive axis target values (XG) out of the supplied drive axis target values (XS), a subtraction unit (12), which ascertains the high-frequency drive axis target values (XF) as the difference between the original drive axis target values (XS) and the low-frequency drive axis target values (XG), and an activatable switch (15) upstream of the low-pass filter (11) as the transfer device, which in its one switch position relays the supplied drive axis target values (XS) and in its other switch position relays a constant drive axis target value (XS_{const}) to the low-pass filter (11).

9. The laser cutting machine as claimed in claim 8, **characterized in that** the device (10') comprises a delaying unit (14) upstream of the subtraction unit (12), which delays in time the supplied drive axis target values (XS) by at least the group delay of the low-pass filter (11).

10. The laser cutting machine as claimed in any one of claims 7 to 9, **characterized in that** the first drive (6) is designed for moving the workpiece (4) along two drive axes (X, Y) perpendicular to one another and the second drive (7) is designed for moving the laser cutting head (8) along the two drive axes (X, Y).

11. The laser cutting machine as claimed in claim 10, **characterized in that** the device (10; 10') comprises, for each of the two drive axes (X, Y), a low-pass filter (11) and a subtraction unit (12) for the movement division of the drive axis target values (XS, YS) of the target path (3) into low-frequency drive axis target values (XG, YG) of the drive axes (X, Y) and high-frequency drive axis target values (XF, YF) of the drive axes (X, Y) and an activatable switch (15) upstream of the low-pass filter (11), which in its one switch position relays the supplied drive axis target values (XS, YS) and in its other switch position relays a constant drive axis target value (XS_{const}, YS_{const}) to the low-pass filter (11).

12. The laser cutting machine as claimed in claim 11, **characterized in that** the device (10') comprises delaying units (14) upstream of the subtraction units (12) for both drive axes (X, Y), which delay in time the supplied drive axis target values (XS, YS) by at least the group delay of the low-pass filter (11).

## Revendications

1. Procédé pour découper une partie de pièce (2) le long d'une trajectoire de consigne fermée (3) à partir d'une pièce (4) en forme de plaque au moyen d'un faisceau laser (5) d'une machine de découpe au laser (1) qui présente un premier entraînement (6) pour déplacer la pièce (4) au moins le long d'un premier axe d'entraînement (X), un deuxième entraînement (7) pour déplacer une tête de découpe au laser (8) qui oriente le faisceau laser (5) sur la pièce (4) au moins le long du premier axe d'entraînement (X), des valeurs de consigne d'axe d'entraînement (XS) de la trajectoire de consigne (3) du faisceau laser (5) étant divisées en valeurs de consigne d'axe d'entraînement (XG) pour le premier entraînement (6) et en valeurs de consigne d'axe d'entraînement (XF) pour le deuxième entraînement (7),
**caractérisé en ce**
**qu'**à partir d'un point dans le temps qui précède la position finale de découpe (F) de la partie de pièce (2) d'au moins le temps de freinage du premier entraînement (6), on fait passer les valeurs de consigne d'axe d'entraînement (XG) pour le premier entraînement (6) à une valeur de consigne d'axe d'entraînement constante, de sorte qu'après le freinage du premier entraînement (6), la découpe de la partie de pièce (2) n'est plus effectuée que par déplacement de la tête de découpe au laser (8) et la pièce (4) s'immobilise au plus tard à la position finale de découpe (F).

2. Procédé selon la revendication 1, **caractérisé en ce que** le point de commutation est choisi de telle sorte que la pièce (4) s'immobilise juste au moment où le faisceau laser (5) atteint la position finale de découpe (F).

3. Procédé selon la revendication 1 ou 2, **caractérisé en ce que** des valeurs de consigne d'axe d'entraînement à basse fréquence (XG) sont filtrées à partir des valeurs de consigne d'axe d'entraînement (XS) au moyen d'un filtre passe-bas (11) et des valeurs de consigne d'axe d'entraînement à haute fréquence (XF) sont déterminées comme différence entre les valeurs de consigne d'axe d'entraînement initiales (XS) et les valeurs de consigne d'axe d'entraînement à basse fréquence (XG).

4. Procédé selon la revendication 3, **caractérisé en ce que** les valeurs de consigne d'axe d'entraînement (XG) pour le premier entraînement (6) sont commutées sur une valeur de consigne d'axe d'entraînement constante (XS_{const}) par un commutateur (15) disposé en amont du filtre passe-bas (11) à partir du point dans le temps qui précède la position finale de découpe (F) de la partie de pièce (2) d'au moins le temps de freinage du premier entraînement (6).

5. Procédé selon la revendication 3 ou 4, **caractérisé en ce que**, dans le cas d'une division de trajectoire dans laquelle des valeurs de consigne d'axe d'entraînement à haute fréquence (XF) sont déterminées comme différence entre les valeurs de consigne d'axe d'entraînement initiales (XS) non retardées dans le temps et les valeurs de consigne d'axe d'entraînement à basse fréquence (XG), le point de commutation précède la position finale de découpe (F) de la partie de pièce (2) d'au moins le double du temps de propagation de groupe du filtre passe-bas (11).

6. Procédé selon la revendication 3 ou 4, **caractérisé en ce que**, dans le cas d'une division de trajectoire dans laquelle des valeurs de consigne d'axe d'entraînement à haute fréquence (XF) sont déterminées comme différence entre les valeurs de consigne d'axe d'entraînement initiales (XS) retardées dans le temps et les valeurs de consigne d'axe d'entraînement à basse fréquence (XG), le point de commutation du filtre passe-bas (11) précède la position finale de découpe (F) de la partie de pièce (2) d'au moins un temps de propagation de groupe du filtre passe-bas (11).

7. Machine de découpe au laser (1) pour découper au laser des parties de pièce (2) le long d'une trajectoire de consigne fermée (3) à partir d'une pièce (4) en forme de plaque au moyen d'un faisceau laser (5), comportant un premier entraînement (6) pour déplacer la pièce (4) au moins le long d'un premier axe d'entraînement (X) et un deuxième entraînement (7) pour déplacer une tête de découpe au laser (8) qui oriente le faisceau laser (5) sur la pièce (4) au moins le long du premier axe d'entraînement (X), et comportant un dispositif (10 ; 10') pour diviser le déplacement de valeurs de consigne d'axe d'entraînement (XS) de la trajectoire de consigne (3) du faisceau laser (5) en valeurs de consigne d'axe d'entraînement à basse fréquence (XG) du premier entraînement (6) et en valeurs de consigne d'axe d'entraînement à haute fréquence (XF) du deuxième entraînement (7), le dispositif (10 ; 10') déterminant les valeurs de consigne d'axe d'entraînement à haute fréquence (XF) comme différence entre les valeurs de consigne d'axe d'entraînement initiales (XS) et les valeurs de consigne d'axe d'entraînement à basse fréquence (XG),
**caractérisée en ce**
**que** le dispositif (10 ; 10') présente un moyen de transfert commandable (15) qui fait passer les valeurs de consigne d'axe d'entraînement (XG) pour le premier entraînement (6) à une valeur de consigne d'axe d'entraînement constante.

8. Machine de découpe au laser selon la revendication 7, **caractérisée en ce que** le dispositif présente un filtre passe-bas (11) qui filtre les valeurs de consigne d'axe d'entraînement à basse fréquence (XG) à partir des valeurs de consigne d'axe d'entraînement fournies (XS), un soustracteur (12) qui détermine les valeurs de consigne d'axe d'entraînement à haute fréquence (XF) comme différence entre les valeurs de consigne d'axe d'entraînement initiales (XS) et les valeurs de consigne d'axe d'entraînement à basse fréquence (XG), et présente en tant que moyen de transfert un commutateur commandable (15) qui est disposé en amont du filtre passe-bas (11) et qui, dans une position de commutation, transmet au filtre passe-bas (11) les valeurs de consigne d'axe d'entraînement fournies (XS) et, dans son autre position de commutation, lui transmet une valeur de consigne d'axe d'entraînement constante (XS_{const}).

9. Machine de découpe au laser selon la revendication 8, **caractérisée en ce que** le dispositif (10') présente un retardateur (14) disposé en amont du soustracteur (12) qui retarde les valeurs de consigne d'axe d'entraînement fournies (XS) d'au moins le temps de propagation de groupe du filtre passe-bas (11).

10. Machine de découpe au laser selon l'une des revendications 7 à 9, **caractérisée en ce que** le premier entraînement (6) est conçu pour déplacer la pièce (4) le long de deux axes d'entraînement (X, Y) perpendiculaires entre eux et le deuxième entraînement (7) pour déplacer la tête de découpe au laser (8) le long des deux axes d'entraînement (X, Y).

11. Machine de découpe au laser selon la revendication 10, **caractérisée en ce que** le dispositif (10 ; 10') présente pour chacun des deux axes d'entraînement (X, Y) un filtre passe-bas (11) et un soustracteur (12) pour diviser le déplacement des valeurs de consigne d'axe d'entraînement (XS, YS) de la trajectoire de consigne (3) en valeurs de consigne d'axe d'entraînement à basse fréquence (XG, YG) des axes d'entraînement (X, Y) et en valeurs de consigne d'axe d'entraînement à haute fréquence (XF, YF) des axes d'entraînement (X, Y) ainsi qu'un commutateur commandable (15) qui est disposé en amont du filtre passe-bas (11) et qui, dans une position de commutation, transmet au filtre passe-bas (11) les valeurs de consigne d'axe d'entraînement fournies (XS, YS) et, dans son autre position de commutation, lui transmet une valeur de consigne d'axe d'entraînement constante (XS_{const}, YS_{const}).

12. Machine de découpe au laser selon la revendication 11, **caractérisée en ce que** le dispositif (10') présente pour les deux axes d'entraînement (X, Y), en amont des soustracteurs (12), des retardateurs (14) qui retardent les valeurs de consigne d'axe d'entraînement fournies (XS, YS) d'au moins le temps de propagation de groupe du filtre passe-bas (11).
